# EUROPÄISCHE PATENTSCHRIFT

(11) **EP 2 954 768 B1**
(45) Veröffentlichungstag und Bekanntmachung des Hinweises auf die Patenterteilung: **02.10.2019**
(21) Anmeldenummer: 15401050.8
(22) Anmeldetag: 01.06.2015
(51) Int. Cl.: A01C 7/00, A01C 7/06

(54) **SÄMASCHINENEINHEIT UND SÄMASCHINE**
SOWING MACHINE UNIT AND SOWING MACHINE
UNITÉ DE MACHINE À SEMER ET MACHINE À SEMER

(30) Priorität: 12.06.2014 DE 102014108228
(43) Veröffentlichungstag der Anmeldung: 16.12.2015
(73) Patentinhaber: Amazonen-Werke H. Dreyer GmbH & Co. KG, 49205 Hasbergen (DE)
(72) Erfinder: Wilken, Martin, 26123 Oldenburg (DE); Mertens, Daniel, 26121 Oldenburg (DE)

(56) Entgegenhaltungen:
- EP-A1- 1 216 608
- US-A1- 2007 044 694
- US-A1- 2013 000 535
- US-B1- 6 314 897

## Beschreibung

Die Erfindung betrifft eine Sämaschineneinheit gemäß dem Oberbegriff des Anspruchs 1 und eine Sämaschine gemäß dem Oberbegriff des Anspruchs 14. Eine derartige Sämaschine ist in der EP1216608A1 beschrieben.

Eine weitere derartige Sämaschine wird für Direktsaat eingesetzt und ist beispielsweise aus der US 5,787,994 bekannt. Die Sämaschine weist in Fahrtrichtung gesehen hintereinander eine Reinigungsanordnung aus zwei Scheiben, eine Düngerplatzierungsvorrichtung mit einer Schneidscheibe und dahinter eine Säschar mit zwei Scheiben und ein Tiefenrad auf. Durch die hintereinanderliegende Anordnung der verschiedenen Elemente in Fahrtrichtung ergibt sich eine lange Bauweise dieser Sämaschine.

Die US 8,393,407 offenbart eine Sämaschine, bei der in Fahrtrichtung ein Pflugmesser, eine Reinigungsanordnung mit zwei Scheiben, eine Säschar mit zwei Scheiben, ein Tiefenrad und ein Furchenschließer angeordnet sind. Auch hier ergibt sich eine lange Bauweise.

Die US 4,785,890 offenbart eine Sämaschine, die in Fahrtrichtung eine Reinigungsanordnung mit zwei Scheiben, eine Säschar mit zwei Scheiben, ein Tiefenradpaar und ein Schließradpaar aufweist. Eine Düngerplatzierungsvorrichtung ist zwischen dem Tiefenradpaar angeordnet. Auch diese Sämaschine weist ebenfalls eine vergleichsweise lange Bauweise auf.

Daher ist es Aufgabe der Erfindung, eine Sämaschineneinheit und eine Sämaschine umfassend derartige Sämaschineneinheiten zur Verfügung zu stellen, die eine verkürzte und kompakte Bauweise aufweist und ein gleichzeitiges Ausbringen von Düngemittel und Saatgut ermöglicht.

Die Aufgabe wird gelöst durch die Sämaschineneinheit nach Anspruch 1 und die Sämaschine nach Anspruch 14. Bevorzugte Ausführungsformen sind in den Unteransprüchen offenbart.

Die Sämaschineneinheit umfasst eine Düngerplatzierungseinheit und eine in Fahrtrichtung hinter der Düngerplatzierungseinheit und seitlich versetzt zu der Düngerplatzierungseinheit angeordnete Säschareinheit. Neben der Düngerplatzierungseinheit ist ein Räumelement in Fahrtrichtung annähernd fluchtend vor der Säschareinheit angeordnet.

Das Räumelement entfernt Rückstände, wie beispielweise abgestorbene Pflanzenreste, wachsende Pflanzen, Strohhäcksel, auf und aus dem Feldboden, in den Saatgut eingebracht werden soll. Auch eventuell an den Rückständen anhaftender Boden, z.B. im Wurzelwerk, wird aus dem Weg der Säschareinheit entfernt. Somit ergibt sich ein geräumter Bereich vor der Säschareinheit, wodurch eine Säfurche und auszubringendes Saatgut in einen von Rückständen befreiten Boden eingebracht werden kann. Zudem wird die Eindringtiefe der Säschareinheit nicht durch vorhandene Rückstände beeinflusst, so dass Saatgut entlang der ganzen Saatfurche in einer zumindest annähernd gleichen Tiefe angeordnet werden kann.

Dadurch dass das Räumelement und die Düngerplatzierungseinheit nebeneinander angeordnet sind, wird der Raum, der nicht durch die Düngerplatzierungseinheit genutzt wird, sinnvoll durch das Räumelement genutzt. So kann mit einem Entfernen von Rückständen auf und aus dem Feldboden in der Höhe der Düngerplatzierungseinheit begonnen werden. Diese Raumausnutzung durch das Nebeneinanderanordnen ermöglicht eine verkürzte und kompakte Bauweise der Sämaschineneinheit.

Die Düngerplatzierungseinheit ist seitlich versetzt zu der Säschareinheit angeordnet, damit Düngemittel nicht auf oder in unmittelbarer Nähe zu dem Saatgut abgelegt wird.

Der Ausdruck "neben" bedeutet hierbei, dass quer zur Transportrichtung betrachtet, die Düngerplatzierungseinheit und das Räumelement derart angeordnet sind, dass sie in dieser Projektion zu einem großen Teil überlappen.

Der Ausdruck "annähernd fluchtend" bedeutet, dass das Räumelement in der Transportrichtung betrachtet beispielsweise eine größere Breite aufweist als die Säschareinheit.

Vorzugsweise ist das Räumelement um eine Drehachse drehbar gelagert, so dass das Räumelement auf dem Feldboden abrollen kann.

Das Räumelement kann als einzelner Räumstern ausgebildet sein. Durch die Zähne des Sterns können Rückstände gut erfasst und entfernt werden.

In einer anderen Ausführungsform kann das Räumelement als einzelne Scheibe ausgebildet sein. Hierbei kann die Scheibe einen gezahnten oder einen gezackten oder einen gewellten Randbereich umfassen. Die Scheibe ermöglicht eine gute Bodenführung, wobei Rückstände im Wechselwirkungsbereich von Scheibe und Boden entfernt werden können.

Die Düngerplatzierungseinheit kann eine Schneidscheibe und eine in der Fahrtrichtung annähernd fluchtend hinter der Schneidscheibe angeordnete Düngerablageeinheit für Düngemittel umfassen. Mittels der Schneidscheibe kann eine Furche in den Boden eingebracht werden, wobei mittels der Düngerablageeinheit dann Düngemittel in der Furche abgelegt werden kann. Der Ausdruck "annähernd fluchtend" bedeutet beispielsweise, dass die Düngerablageeinheit zwar eine größere Breite (senkrecht zu der Transportrichtung gesehen) aufweist als die Dicke der Schneidscheibe, aber dass die Düngerablageeinheit derart hinter der Schneidscheibe angeordnet ist, dass Düngemittel in eine durch die Schneidscheibe erzeugte Furche eingebracht werden kann.

Die Schneidscheibe kann annähernd vertikal ausgerichtet sein. Dadurch lässt sich die Tiefe der durch die Schneidscheibe erzeugten Furche leicht festlegen, und es wird die Erzeugung einer nach innen geneigten Bodenwand vermieden, die möglicher Weise in die Furche zurückrutscht, bevor das Düngemittel in der Furche abgelegt werden konnte.

Das Räumelement kann geneigt und verkippt zu einer vertikalen Ebene angeordnet sein, die parallel zu der Transportrichtung verläuft. Dadurch ist der Bereich, der durch das Räumelement von Rückständen geräumt wird vergleichsweise größer, so dass die in der Fahrtrichtung annähernd fluchtend hinter dem Räumelement angeordnete Säschareinheit auf einen geräumten Bereich trifft. Die geneigte und verkippte Anordnung des Räumelements ermöglicht, dass Rückstände des Feldbodens mittels des Räumelements aus einem Bereich entfernt werden, auf dem das Räumelement abrollt, wobei die Rückstände von der Schneidscheibe wegbewegt werden können, wenn ein hinterer Bereich des Räumelements weiter weg von der Schneidscheibe liegt als ein vorderer Bereich des Räumelements.

Ein erster vorderer Bereich des Räumelements ist in der Fahrtrichtung nachfolgend oder gleichauf mit einem zweiten vorderen Bereich der Schneidscheibe angeordnet. Als vorderer Bereich ist hierbei jeweils ein Bereich des Räumelements bzw. der Schneidscheibe zu verstehen, der in der Fahrtrichtung eine gedachte vertikale Ebene, die senkrecht zu der Fahrtrichtung ausgerichtet ist, zuerst passiert. Somit beziehen sich die Ausdrücke "vorderer" Bereich bzw. "hinterer" Bereich auf die relative Anordnung im Hinblick auf die Transportrichtung. Bei der gedachten Ebene trifft der vordere Bereich bei einer Bewegung in der Transportrichtung zuerst auf diese Ebene und später der hintere Bereich. Durch das Abrollen des Räumelements bzw. der Schneidscheibe auf dem Feldboden sind der vordere Bereich und der hintere Bereich während der Drehung jeweils unterschiedlichen Gebieten des Räumelements bzw. der Schneidscheibe zugeordnet.

Das Räumelement kann derart angeordnet sein, dass ein durch das Räumelement geräumter Bereich eine gleiche Breite wie oder eine größere Breite als eine Säfurchenbreite der Säschareinheit aufweist. Somit kann gewährleistet werden, dass die Säschareinheit in einem geräumten Bereich arbeitet und nicht durch Rückstände beeinflusst wird. Beispielsweise wird die Eindringtiefe der Säschareinheit nicht durch vorhandene Rückstände beeinflusst, so dass Saatgut entlang der ganzen Saatfurche in einer zumindest annähernd gleichen Tiefe angeordnet werden kann.

Die Sämaschineneinheit kann weiter ein oder mehrere Tiefenräder umfassen. Mittels der Tiefenräder kann festgelegt werden, wie tief die Schneidscheibe bzw. die Säschareinheit, hierbei insbesondere die Doppelscheibenschar in den Boden eindringt.

Es kann auch vorgesehen sein, dass die Sämaschineneinheit weiter ein Andrückrad oder mehrere Andrückräder umfasst, das/die in der Fahrtrichtung annähernd fluchtend hinter der Säschareinheit angeordnet ist/sind. Das Andrückrad oder die Andrückräder können Saatgut in der Säfurche andrücken, so dass es bei einem Schließen der Säfurche mittels Bodens zu keiner unerwünschten Verschiebung des Saatguts kommen kann.

Die Sämaschineneinheit kann weiter ein oder mehrere Schließräder umfassen, die in der Fahrtrichtung annähernd fluchtend hinter der Säschareinheit angeordnet ist. Mittels dem einen oder der mehreren Schließräder kann Boden, der zuvor aus der Säfurche entfernt wurde zumindest teilweise wieder zurückverbracht werden, so dass die Säfurche verschlossen durch Boden verschlossen wird.

Es kann auch vorgesehen sein, dass ein Schließrad oder mehrere Schließräder annähernd fluchtend hinter der Säschareinheit und hinter der Düngerplatzierungseinheit angeordnet ist/sind, so dass sowohl die Säfurche als auch die Furche der Schneidscheibe mittels des einen Schließrads oder der mehreren Schließräder geschlossen werden kann/können.

Die Säschareinheit kann eine Doppelscheibenschar und eine Saatgutablageeinheit für Saatgut umfassen, wobei die Saatgutablageeinheit derart angeordnet ist, dass das Saatgut in eine durch die Säschar erzeugte Säfurche einbringbar ist. Vorzugsweise ist die Saatgutablageeinheit zwischen den beiden Scharen der Doppelscheibenschar angeordnet. Die beiden Scheibenscharen sind gegeneinander geneigt und verkippt angeordnet, so dass mittels der Doppelscheibenschar eine Säfurche in den Boden eingebracht werden kann.

Eine Sämaschine zum gleichzeitigen Ausbringen von Saatgut und Düngemittel umfasst eine Sämaschineneinheit oder mehrere Sämaschineneinheiten wie oben oder weiter unten beschrieben. Die eine Sämaschineneinheit oder die mehreren Sämaschineneinheiten kann/können beispielsweise mittels einer Halterungsvorrichtung an einem Balken der Sämaschine angebracht sein, wobei mehrere Sämaschineneinheiten vorzugsweise nebeneinander angeordnet sind.

Weitere Merkmale und Vorteile der Erfindung werden nachfolgend anhand der beispielhaften Figuren erläutert. Dabei zeigt
- Fig. 1: eine Schrägansicht einer Sämaschineneinheit,
- Fig. 2: eine Schrägansicht von Düngerplatzierungseinheit und Räumelement,
- Fig. 3: eine Draufsicht auf Düngerplatzierungseinheit und Räumelement und
- Fig. 4: eine schematische Ansicht eines erzeugten Bodenbildes.

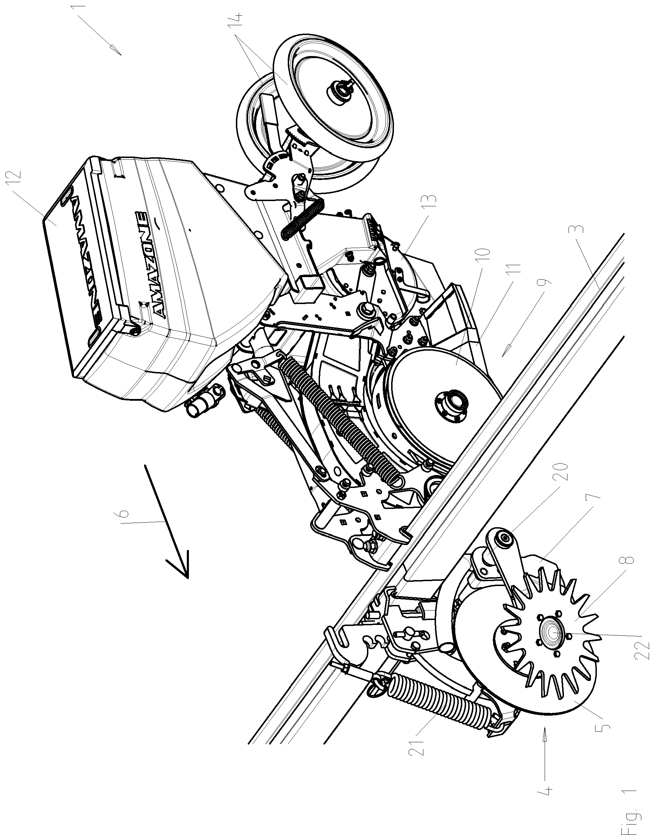

Figur 1 zeigt eine Schrägansicht einer Sämaschineneinheit 1 wie sie von einer Sämaschine zum gleichzeitigen Ausbringen von Saatgut und Düngemittel für eine Direktsaat umfasst sein kann. Die Sämaschineneinheit 1 ist mittels einer Halterungsvorrichtung 2 an einem Balken 3 der Sämaschine angebracht.

Die Sämaschineneinheit 1 umfasst eine Düngerplatzierungseinheit 4 mit einer drehbaren Schneidscheibe 5 und einer in der Fahrtrichtung 6 annähernd fluchtend hinter der Schneidscheibe 5 angeordneten Düngerablageeinheit 7 für die Platzierung von Düngemittel in einer durch die Schneidscheibe 5 erzeugte Furche. Der Ausdruck "annähernd fluchtend" bedeutet beispielsweise, dass die Düngerablageeinheit 7 zwar eine größere Breite (senkrecht zu der Transportrichtung 6 gesehen) aufweist als die Dicke der Schneidscheibe 5, aber dass die Düngerablageeinheit 7 derart hinter der Schneidscheibe 5 angeordnet ist, dass Düngemittel in eine durch die Schneidscheibe erzeugte Furche eingebracht werden kann.

Neben der Düngerplatzierungseinheit 4 ist ein Räumelement 8 angeordnet, das um eine Drehachse 22 drehbar ist und das hier als Räumstern ausgeführt ist. In der Fahrtrichtung 6 ist das Räumelement 8 zudem annähernd fluchtend vor einer Säschareinheit 9 angeordnet. Der Ausdruck "neben" bedeutet hierbei, dass quer zur Transportrichtung 6 betrachtet, die Düngerplatzierungseinheit 4, insbesondere die Schneidscheibe 5, und das Räumelement 8 derart angeordnet sind, dass sie in dieser Projektion zu einem großen Teil überlappen. Der Ausdruck "annähernd fluchtend" bedeutet, dass das Räumelement 8 in der Transportrichtung 6 betrachtet beispielsweise eine größere Breite aufweist als die beiden zueinander geneigten und verkippten Scharen der Doppelscheibenschar 10 der Säschareinheit 9.

Die Säschareinheit 9 ist somit in der Fahrtrichtung 6 hinter der Düngerplatzierungseinheit 4, seitlich versetzt zu der Düngerplatzierungseinheit 4 und annähernd fluchtend hinter dem Räumelement 8 angeordnet. Die Säschareinheit 9 umfasst die drehbare Doppelscheibenschar 10, von der in Figur 1 nur eine Schar sichtbar ist und eine Saatgutablageeinheit 11 (nicht sichtbar) für Saatgut zwischen der Doppelscheibenschar 10 für die Platzierung von Saatgut in einer durch die Doppelscheibenschar 10 erzeugten Furche. Das Saatgut kann in einem Saatgutbehälter 12 untergebracht sein.

Mittels eines Andrückrads 13 kann das Saatgut in einer Furche, die durch die Doppelscheibenschar 10 erzeugt wurde, angedrückt werden.

Mittels der zwei gegeneinander geneigten und verkippten Schließräder 14 können die Furche des Schneidrads 5 und die Säfurche der Doppelscheibenschar 10 wieder verschlossen werden. Dazu wird Boden, der zuvor aus den Furchen entfernt wurde, zumindest teilweise, wieder zurückverbracht. Je nach Anordnung und Dimension der Schließräder 14 kann auch nur die Säfurche der Doppelscheibenschar 10 wieder mit Boden verschlossen werden.

Die Düngerplatzierungseinheit 4 und das Räumelement 8 sind mit einer gemeinsamen Struktur 20 verbunden, wobei diese Struktur 20 mittels der Halterungsvorrichtung 2 an einem Balken 3 der Sämaschine angebracht ist. Um zu starke Belastungen der Struktur 20 und der Halterungsvorrichtung 2 bei Bodenunebenheiten zu vermeiden, ist eine straffe Feder 21 vorgesehen, die durch Bodenunebenheiten bedingte Bewegungen und dadurch auftretende Kräfte puffert.

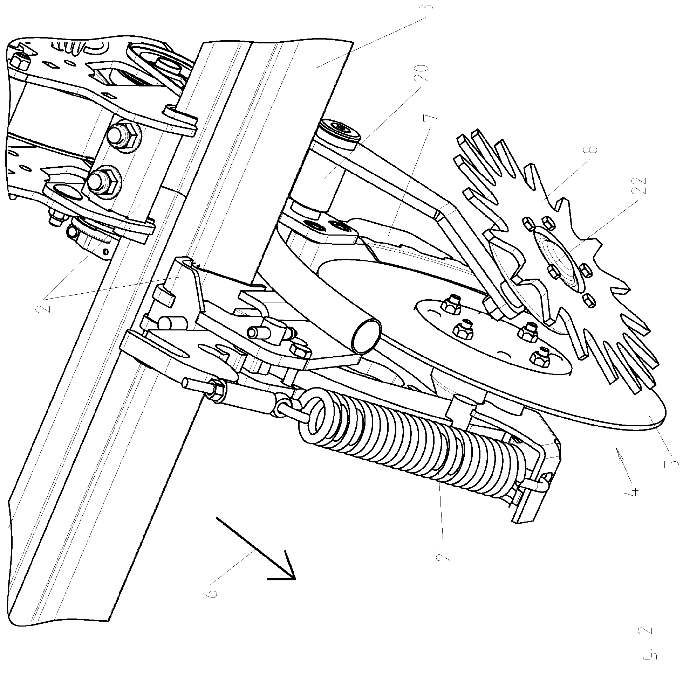

Figur 2 zeigt eine Schrägansicht von Düngerplatzierungseinheit 4 und Räumelement 8. Hierbei ist gut zu erkennen, dass die Düngerablageeinheit 7 für Düngemittel in der Fahrtrichtung 6 annähernd fluchtend hinter der Schneidscheibe 5 angeordnet ist.

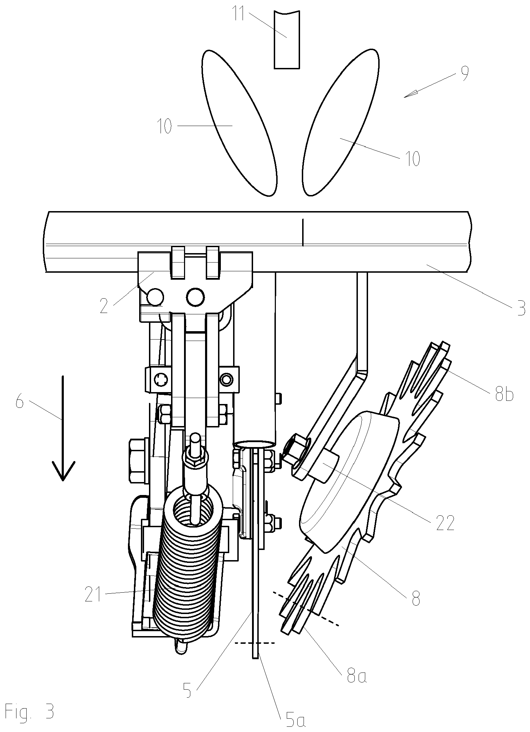

Figur 3 zeigt eine Draufsicht auf die Düngerplatzierungseinheit 4 und das Räumelement 8. Hierbei wird deutlich, dass in dieser Ausführungsform die Schneidscheibe 5 vertikal ausgerichtet ist und das Räumelement 8 geneigt zu einer vertikalen Ebene, d.h. auch geneigt zu der Schneidscheibe 5, angeordnet ist.

Das Räumelement 8 ist zudem verkippt angeordnet, so dass der vordere Bereich 8a des Räumelements 8 näher zu der Schneidscheibe 5 zu liegen kommt als ein hinterer Bereich 8b des Räumelements 8. Die Ausdrücke "vorderer" Bereich 8a bzw. "hinterer" Bereich 8b beziehen sich auf die relative Anordnung im Hinblick auf die Transportrichtung 6. Bei einer gedachten Ebene, die senkrecht zu der Transportrichtung 6 verläuft, trifft der vordere Bereich 8a bei einer Bewegung in der Transportrichtung 6 zuerst auf diese Ebene und später der hintere Bereich 8b. Durch das Abrollen des Räumelements 8 auf dem Feldboden sind der vordere Bereich 8a und der hintere Bereich 8b während der Drehung jeweils unterschiedlichen Gebieten des Räumelements 8 zugeordnet.

Der vordere Bereich 8a des Räumelements 8 ist in der Fahrtrichtung 6 nachfolgend dem vorderen Bereich 5a der Schneidscheibe 5 angeordnet, d.h. das Räumelement 8 ragt in der Transportrichtung 6 nicht über die Schneidscheibe 5 hinaus.

Die geneigte und verkippte Anordnung des Räumelements 8 ermöglicht, dass Rückstände des Feldbodens mittels des Räumelements 8 aus einem Bereich entfernt werden, auf dem das Räumelement 8 abrollt, wobei die Rückstände von der Schneidscheibe 5 wegbewegt werden, da der hinterer Bereich 8b des Räumelements 8 weiter weg von der Schneidscheibe 5 liegt als der vordere Bereich 8a des Räumelements 8.

Das Räumelement 8 ist in der Transportrichtung 6 annähernd fluchtend vor der Säschareinheit 9 angeordnet, so dass eine durch die Doppelscheibenschar 10 erzeugte Säfurche in einem von Rückständen bereinigtem Feldboden erstellt und Saatgut mittels der Saatgutablageeinheit 11 in der Säfurche angeordnet werden kann.

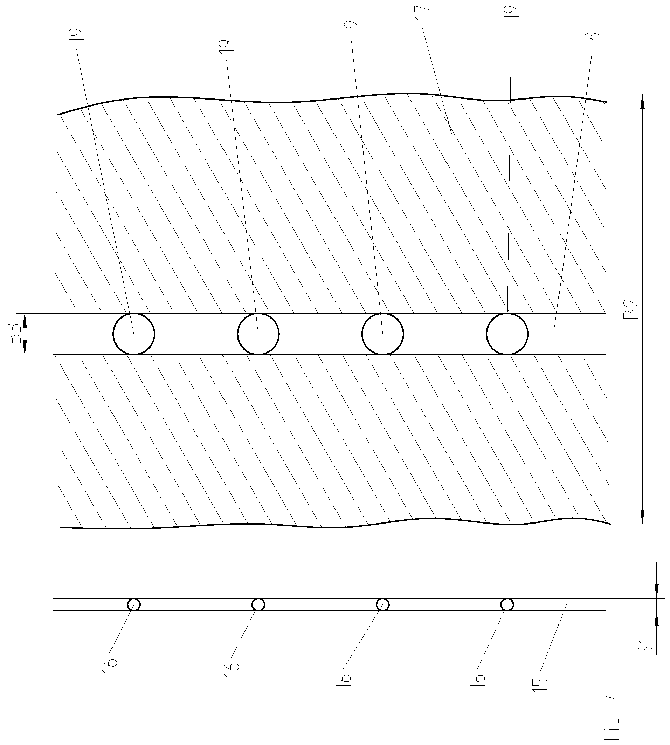

Figur 4 zeigt eine schematische Ansicht eines erzeugten Bodenbildes. Die Schneidscheibe 5 erzeugt eine erste Furche 15 mit einer ersten Breite B1, wobei in die erste Furche 15 mittels der Düngerablageeinheit 7 Düngemittel 16 an dafür vorgesehenen Stellen abgelegt wird. Mittels des Räumelements 8 wird neben der ersten Furche 15 ein Bereich 17 mit einer zweiten Breite B2 geräumt, d.h. Rückstände wie abgestorbene Pflanzenreste, wachsende Pflanzen oder Strohhäcksel wurden entfernt. In diesem geräumten Bereich 17 wird mittels der Säschareinheit 9, d.h. mittels der Doppelscheibenschar 10, eine zweite Furche 18 (auch Säfurche genannt) mit einer dritten Breite B3 erzeugt, wobei in die zweite

Furche 18 mittels der Saatgutablageeinheit 11 Saatgut 19 an dafür vorgesehene Stellen abgelegt wird.

Es folgen 4 Blatt mit 4 Figuren. Die Bezugszeichen sind dabei wie folgt belegt:
1 Sämaschineneinheit
2 Halterungsvorrichtung
3 Balken
4 Düngerplatzierungseinheit
5 Schneidscheibe
5a vorderer Bereich von 5
6 Fahrtrichtung
7 Düngerablageeinheit
8 Räumelement
8a vorderer Bereich von 8
8b hinterer Bereich von 8
9 Säschareinheit
10 Doppelscheibenschar
11 Saatgutablageeinheit
12 Saatgutbehälter
13 Andrückrad
14 Schließräder
15 erste Furche
16 Düngemittel
17 geräumter Bereich
18 zweite Furche
19 Saatgut
20 Struktur
21 straffe Feder
22 Drehachse
B1 erste Breite
B2 zweite Breite
B3 dritte Breite

## Patentansprüche

1. Sämaschineneinheit (1) umfassend eine Düngerplatzierungseinheit (4) und eine in Fahrtrichtung (6) hinter der Düngerplatzierungseinheit (4) und seitlich versetzt zu der Düngerplatzierungseinheit (4) angeordnete Säschareinheit (9), wobei neben der Düngerplatzierungseinheit (4) ein Räumelement (8) in der Fahrtrichtung (6) annähernd fluchtend vor der Säschareinheit (9) angeordnet ist, **dadurch gekennzeichnet, dass** nur ein einziges Räumelement (8) auf einer Seite seitlich neben einer Schneidscheibe (5) der Düngerplazierungseinheit (4) angeordnet ist und diese nicht nach vorn überragt.

2. Sämaschineneinheit (1) nach Anspruch 1, wobei das Räumelement (8) als einzelner Räumstern ausgebildet ist.

3. Sämaschineneinheit (1) nach Anspruch 1, wobei das Räumelement (8) als einzelne Scheibe ausgebildet ist.

4. Sämaschineneinheit (1) nach Anspruch 3, wobei die Scheibe einen gezahnten oder einen gezackten oder einen gewellten Randbereich umfasst.

5. Sämaschineneinheit (1) nach einem der Ansprüche 1 bis 4, wobei die Düngerplatzierungseinheit (4) eine Schneidscheibe (5) und in der Fahrtrichtung (6) eine annähernd fluchtend hinter der Schneidscheibe (5) angeordnete Düngerablageeinheit (7) für Düngemittel (16) umfasst.

6. Sämaschineneinheit (1) nach Anspruch 5, wobei die Schneidscheibe (5) annähernd vertikal ausgerichtet ist.

7. Sämaschineneinheit (1) nach einem der Ansprüche 1 bis 6, wobei das Räumelement (8) geneigt und verkippt zu einer vertikalen Ebene angeordnet ist, die parallel zu der Fahrtrichtung (6) verläuft.

8. Sämaschineneinheit (1) nach einem der Ansprüche 5 bis 7, wobei ein erster vorderer Bereich (8a) des Räumelements (8) in der Fahrtrichtung (6) nachfolgend oder gleichauf mit einem zweiten vorderen Bereich (5a) der Schneidscheibe (5) angeordnet ist.

9. Sämaschineneinheit (1) nach einem der Ansprüche 1 bis 8, wobei das Räumelement (8) derart angeordnet ist, dass ein durch das Räumelement (8) geräumter Bereich (17) eine gleiche Breite (B2) wie oder eine größere Breite (B2) als eine Säfurchenbreite (B3) der Säschareinheit (9) aufweist.

10. Sämaschineneinheit (1) nach einem der Ansprüche 1 bis 9, weiter umfassend ein Tiefenrad oder mehrere Tiefenräder.

11. Sämaschineneinheit (1) nach einem der Ansprüche 1 bis 10, weiter umfassend ein Andrückrad (13) oder mehrere Andrückräder (13), das/die in der Fahrtrichtung (6) annähernd fluchtend hinter der Säschareinheit (9) angeordnet ist/sind.

12. Sämaschineneinheit (1) nach einem der Ansprüche 1 bis 11, weiter umfassend ein Schließrad (14) oder mehrere Schließräder (14), das/die in der Fahrtrichtung (6) annähernd fluchtend hinter der Säschareinheit (9) angeordnet ist/sind.

13. Sämaschineneinheit (1) nach einem der Ansprüche 1 bis 12, wobei die Säschareinheit (9) eine Doppelscheibenschar (10) und eine Saatgutablageeinheit (11) für Saatgut (19) umfasst, wobei die Saatgutablageeinheit (11) derart angeordnet ist, dass das Saatgut (19) in eine durch die Säschareinheit (9) erzeugte Säfurche (18) einbringbar ist.

14. Sämaschine zum gleichzeitigen Ausbringen von Saatgut (19) und Düngemittel (16) **gekennzeichnet durch** eine Sämaschineneinheit (1) oder mehrere Sämaschineneinheiten (1) nach einem der Ansprüche 1 bis 13.

## Claims

1. Seed drill unit (1) comprising a fertilizer placement unit (4) and a sowing coulter unit (9) arranged behind the fertilizer placement unit (4) in the direction of travel (6) and in a manner laterally offset from the fertilizer placement unit (4), wherein, next to the fertilizer placement unit (4), a rake element (8) is arranged in an approximately aligned manner in front of the sowing coulter unit (9) in the direction of travel (6), **characterized in that** only one rake element (8) is arranged on one side laterally next to a cutting disc (5) of the fertilizer placement unit (4) and does not protrude forward beyond the latter.

2. Seed drill unit (1) according to Claim 1, wherein the rake element (8) is in the form of a single star rake.

3. Seed drill unit (1) according to Claim 1, wherein the rake element (8) is in the form of a single disc.

4. Seed drill unit (1) according to Claim 3, wherein the disc comprises a toothed or a serrated or a corrugated peripheral region.

5. Seed drill unit (1) according to one of Claims 1 to 4, wherein the fertilizer placement unit (4) comprises a cutting disc (5) and, in the direction of travel (6), a fertilizer deposition unit (7), arranged approximately in an aligned manner behind the cutting disc (5), for fertilizer (16).

6. Seed drill unit (1) according to Claim 5, wherein the cutting disc (5) is oriented approximately vertically.

7. Seed drill unit (1) according to one of Claims 1 to 6, wherein the rake element (8) is arranged in an inclined and tilted manner with respect to a vertical plane that extends parallel to the direction of travel (6) .

8. Seed drill unit (1) according to one of Claims 5 to 7, wherein a first front region (8a) of the rake element (8) is arranged, in the direction of travel (6), in a manner following or abreast with a second front region (5a) of the cutting disc (5).

9. Seed drill unit (1) according to one of Claims 1 to 8, wherein the rake element (8) is arranged such that a region (17) cleared by the rake element (8) has the same width (B2) as or a greater width (B2) than a seed furrow width (B3) of the sowing coulter unit (9).

10. Seed drill unit (1) according to one of Claims 1 to 9, also comprising a depth wheel or a plurality of depth wheels.

11. Seed drill unit (1) according to one of Claims 1 to 10, also comprising a press wheel (13) or a plurality of press wheels (13) that is/are arranged in an approximately aligned manner behind the sowing coulter unit (9) in the direction of travel (6).

12. Seed drill unit (1) according to one of Claims 1 to 11, also comprising a closing wheel (14) or a plurality of closing wheels (14) that is/are arranged in an approximately aligned manner behind the sowing coulter unit (9) in the direction of travel (6).

13. Seed drill unit (1) according to one of Claims 1 to 12, wherein the sowing coulter unit (9) comprises a double disc coulter (10) and a seed deposition unit (11) for seed (19), wherein the seed deposition unit (11) is arranged such that the seed (19) is able to be introduced into a seed furrow (18) created by the sowing coulter unit (9).

14. Seed drill for simultaneously dispensing seed (19) and fertilizer (16), **characterized by** a seed drill unit (1) or a plurality of seed drill units (1) according to one of Claims 1 to 13.

## Revendications

1. Unité de machine à semer (1), comprenant une unité de positionnement d'engrais (4) et une unité de soc de semoir (9) disposée dans la direction de conduite (6) derrière l'unité de positionnement d'engrais (4) et de manière décalée latéralement par rapport à l'unité de positionnement d'engrais (4), un élément de déblaiement (8) étant disposé à côté de l'unité de positionnement d'engrais (4) dans la direction de conduite (6) approximativement en alignement devant l'unité de soc de semoir (9), **caractérisée en ce que** seulement un élément de déblaiement unique (8) est disposé d'un côté latéralement à côté d'un disque de coupe (5) de l'unité de positionnement d'engrais (4) et ne dépasse pas de celle-ci vers l'avant.

2. Unité de machine à semer (1) selon la revendication 1, dans laquelle l'élément de déblaiement (8) est réalisé sous forme d'unique dispositif étoilé de déblaiement.

3. Unité de machine à semer (1) selon la revendication 1, dans laquelle l'élément de déblaiement (8) est réalisé sous forme de disque unique.

4. Unité de machine à semer (1) selon la revendication 3, dans laquelle le disque comprend une région de bord dentée ou dentelée ou ondulée.

5. Unité de machine à semer (1) selon l'une quelconque des revendications 1 à 4, dans laquelle l'unité de positionnement d'engrais (4) comprend un disque de coupe (5), et, dans la direction de conduite (6), une unité de dépose d'engrais (7) pour de l'engrais (16), disposée approximativement en alignement derrière le disque de coupe (5).

6. Unité de machine à semer (1) selon la revendication 5, dans laquelle le disque de coupe (5) est orienté approximativement verticalement.

7. Unité de machine à semer (1) selon l'une quelconque des revendications 1 à 6, dans laquelle l'élément de déblaiement (8) est disposé de manière inclinée et basculée par rapport à un plan vertical qui s'étend parallèlement à la direction de conduite (6).

8. Unité de machine à semer (1) selon l'une quelconque des revendications 5 à 7, dans laquelle une première région avant (8a) de l'élément de déblaiement (8) est disposée, dans la direction de conduite (6), après ou au même niveau qu'une deuxième région avant (5a) du disque de coupe (5).

9. Unité de machine à semer (1) selon l'une quelconque des revendications 1 à 8, dans laquelle l'élément de déblaiement (8) est disposé de telle sorte qu'une région (17) déblayée par l'élément de déblaiement (8) présente une largeur (B2) identique, ou une largeur (B2) supérieure, à une largeur de sillon (B3) de l'unité de soc de semoir (9) .

10. Unité de machine à semer (1) selon l'une quelconque des revendications 1 à 9, comprenant en outre une roue de profondeur ou plusieurs roues de profondeur.

11. Unité de machine à semer (1) selon l'une quelconque des revendications 1 à 10, comprenant en outre une roue de pressage (13) ou plusieurs roues de pressage (13) qui est/sont disposée(s) dans la direction de conduite (6) approximativement en alignement derrière l'unité de soc de semoir (9).

12. Unité de machine à semer (1) selon l'une quelconque des revendications 1 à 11, comprenant en outre une roue de fermeture (14) ou plusieurs roues de fermeture (14) qui est/sont disposée(s) dans la direction de conduite (6) approximativement en alignement derrière l'unité de soc semoir (9).

13. Unité de machine à semer (1) selon l'une quelconque des revendications 1 à 12, dans laquelle l'unité de soc de semoir (9) comprend un soc à double disque (10) et une unité de dépose de semence (11) pour de la semence (19), l'unité de dépose de semence (11) étant disposée de telle sorte que la semence (19) puisse être introduite dans un sillon (18) produit par l'unité de soc de semoir (9).

14. Machine à semer pour épandre simultanément de la semence (19) et de l'engrais (16), **caractérisée par** une unité de machine à semer (1) ou plusieurs unités de machine à semer (1) selon l'une quelconque des revendications 1 à 13.
